# EUROPÄISCHE PATENTSCHRIFT

(11) **EP 0 667 263 B1**
(45) Veröffentlichungstag und Bekanntmachung des Hinweises auf die Patenterteilung: **20.05.1998**
(21) Anmeldenummer: 95103897.5
(22) Anmeldetag: 29.07.1993
(51) Int. Cl.: B60R 21/26, B60R 22/46, C06B 45/00, C06B 45/14, F42B 5/16, F42B 39/20

(54) **Pyrotechnischer Gasgenerator**
Pyrotechnic gas generator
Générateur de gaz pyrotechnique

(30) Priorität: 28.08.1992 DE 4228696
(43) Veröffentlichungstag der Anmeldung: 16.08.1995
(62) Teilanmeldung aus: 93112174.3
(73) Patentinhaber: Hirtenberger Präzisionstechnik GmbH, 2552 Hirtenberg (AT)
(72) Erfinder: Specht, Martin, D-82340 Feldafing (DE); Krauss, Walter, D-80689 München (DE)
(74) Vertreter: Müllner, Erwin, Dr.

(56) Entgegenhaltungen:
- US-A- 4 004 516
- US-A- 4 411 199
- US-A- 4 927 175

## Beschreibung

Die Erfindung betrifft einen pyrotechnischen Gasgenrator nach dem Oberbegriff des Patentanspruches 1.

Bei Zündung des Treibmittelsatzes durch Selbstzündung bzw. Selbstentflammung kann die Festigkeit der Kapselung um den Treibmittelsatz bzw. des Gehäuses, das um den Treibmittelsatz angeordnet ist, überschritten werden und splitternde Bauteile des durch die Explosion zerstörten Gehäuses noch beschleunigt werden.

Aus der US-A-4 927 175 ist eine Antriebseinrichtung für einen Gurtstraffer eines Kraftfahrzeuges mit einem pyrotechnischen Gasgenerator gemäß dem Oberbegriff des Anspruchs 1 bekannt geworden. Dieser Gasgenerator ist in einer Bohrung des Gehäuses der Antriebseinrichtung eingesetzt. Von der Bohrung führt ein Gaskanal zu einer antreibbaren Kolben-Zylindereinheit. Eine Gehäuseaustritts- oder Druckentlastungsöffnung des Gaskanals ist durch ein Verschlußelement gasdicht verschlossen. Bei normaler Betriebstemperatur der Antriebseinrichtung und somit des Gasgenerators, z. B. bis etwa 80°C, bleibt die Druckentlastungsöffnung durch das Verschlußelement verschlossen. Bevor die Betriebstemperatur die Selbstentzündungstemperatur des Gasgenerators (etwa 180°C) erreicht hat, verringert sich die Festigkeit des Verschlußelementes soweit, daß bei einer Selbstentzündung des Gasgenerators der entstehende Gasdruck durch die sich öffnende Druckentlastungsöffnung entweichen kann. Eine derartige Festigkeitsabnahme des Verschlußelementes kann beispielsweise bei etwa 120° bis 150°C liegen, wenn das Verschlußelement aus Kunststoff besteht. Bei dieser Antriebseinrichtung ist zum Vermeiden des Explodierens der Antriebseinrichtung, wobei splitternde Teile entstehen könnten, eine Druckentlastungsmöglichkeit in dem Gehäuse der Antriebseinrichtung vorgesehen, um bei einer Selbstentzündung des Gasgenerators dem Gasdruck seine zerstörerische Wirkung zu nehmen. Der Ablauf der Verbrennung der pyrotechnischen Treibladung im Gasgenerators selbst oder der Druckverlauf im Gasgenerator wird nicht beeinflußt oder verändert. Eine spezielle Gestaltung des Gasgenerators mit seiner Treibladung ist nicht beschrieben.

Das Dokument US-A-4 411 199 liegt auf dem Gebiet der Waffentechnik und beschreibt einen Booster eines Raketensprengkopfs. Für den Fall, daß bei einem Feuer die gelagerten Sprengköpfe durch übermäßige Temperatur sich selbst entzünden könnten, ist eine Druckentlastung für den dabei entstehenden Gasdruck vorgesehen. Dazu enthält der Booster eine ringförmige Hülse mit über den Umfang verteilten Öffnungen und einen topfförmigen Einsatz, der in die Hülse eingepaßt ist und eine Explosivladung enthält. Das offene Ende des topfförmigen Einsatzes ist mit einer sich in der Hülse abstützenden Abdeckplatte verschlossen. Die Hülse besteht aus einer Metall-Legierung, wohingegen der topfförmige Einsatz aus einem Kunststoffmaterial mit niedrigem Schmelzpunkt besteht. Bei einer Erwärmung des Boosters auf eine erhöhte Temperatur, jedoch Ovor einer Selbstentzündung der Explosivladung, erweicht und schmilzt der topfartige Einsatz. Durch die Öffnungen, die einen Durchmesser aufweisen, der etwa 50-70% der Länge der Hülse beträgt, kann sich das Kunststoffmaterial ausdehnen und somit eine Druckentlastung für den Booster bzw. die Explosivladung ermöglichen. Durch diese Maßnahmen soll eine Selbstentzündung der Explosivladung verhindert werden, um eine Detonation des gesamten Sprengkopfes mit den daraus resultierenden erheblichen Beschädigungen der Umgebung in jedem Fall auszuschließen.

Aus dem Dokument US-A-4 004 516, das ebenfalls das Gebiet der Waffentechnik betrifft, ist eine Kombination aus einer Boosterladung und einer Zündladung bekannt geworden, die in einem Behälter in einem Gehäuse in einem Sprengkopf untergebracht sind. Die Boosterladung befindet sich in einer topffartigen Kunststoffabdeckung, die an einem Endabschnitt des Behälters angeschraubt ist. Wenn der Sprengkopf bei einem Feuer erwärmt wird, kann ein Temperatur- und Druckanstieg in der den Behälter umgebenden Expansionskammer durch Entlastungsbohrungen vermieden werden. Zusätzlich kann das Kunststoffmaterial der Abdeckung schmelzen, bevor die Selbstzündungstemperatur der Boosterladung erreicht ist, so daß auch dadurch ein Druckabbau erreicht wird. Auch hier soll eine Selbstentzündung der Explosivladung auf jeden Fall verhindert werden.

Durch die im Patentanspruch 1 angegebene Erfindung wird die Aufgabe gelöst, daß bei Zerstörung des Gehäuses durch zu hohe Innenbelastung splitternde Bauteile nicht unzulässig hoch beschleunigt werden.

Hierzu ist der pyrotechnische Gasgenerator in der Weise ausgebildet, daß in dem Treibmittelraum, in welchem der Treibmittelsatz angeordnet ist, ferner ein Brisanzreduktionsmittel angeordnet ist, das bis zu einer Temperatur, die zwischen einer Gebrauchstemperatur des Gasgenerators und einer Selbstentflammungstemperatur des Treibmittelsatzes liegt, temperaturbeständig ist und bei einer Temperatur oberhalb seiner Temperaturbeständigkeit in einen die Brisanz des Treibmittels bei seiner eigenen Zündung reduzierenden Zustand übergeht.

Diese phlegmatisierende Wirkung des Brisanzreduktionsmittels auf die Treibmittelladung bei deren eigener Zündung kann generell bei Gasgeneratoren, d.h. bei einstufigen oder mehrstufigen Gasgeneratoren zum Einsatz gebracht werden. Derartige Gasgeneratoren kommen bevorzugt zur Anwendung zum Antrieb eines in einem Rohr geführten Kolbers, der mit einem Zugmittel, z.B. einem Zugseil, verbunden ist.

In bevorzugter Weise ist das Brisanzreduktionsmittel (Ladungsphlegmatisierung) so ausgebildet, daß es bei der oberhalb seiner Temperaturbeständigkeit und unterhalb der Zündungstemperatur des Treibmittels liegenden Temperatur in einen Zustand übergeht, durch den die Dämmung des Treibmittelraumes reduziert wird.

Die Eigenschaft des Brisanzreduktionsmittels ist dabei so, daß es bei der eigenen Zündung des Treibmittelsatzes frei werdende Energie binden kann, so daß sich diese nicht zu einer unzulässig hohen Beschleunigung von splitternden Bauteilen des Gasgenerators steigert.

Hierzu kann das Material des brisanzreduzierenden Mittels in der Weise ausgebildet sein, daß es bei der oberhalb seiner Temperaturbeständigkeit und unterhalb der Eigenentzündungstemperatur liegenden Temperatur in einen verformbaren Zustand übergeht. Hierdurch wird gewährleistet, daß das gezündete Treibmittel Verformungsarbeit an dem Brisanzreduktionsmittel zu leisten hat und ein Teil der frei werdenden Energie hierfür gebraucht wird, so daß man eine Verringerung der Beschleunigung splitternder Bauteile des explodierenden Gasgenerators erreicht.

In bevorzugter Weise kann hierzu das Material des Brisanzreduktionsmittels aus thermoplastischem Material bestehen, welches bei der angesprochenen Temperatur in einen verformbaren, insbesondere fließfähigen, Zustand übergeht.

Das Brisanzreduktionsmittel kann in Form einer den Treibmittelsatz umfassenden Hülle ausgebildet sein. Diese kann radial nach innen ragende Fortsätze aufweisen, welche für das fließfähige Material des Brisanzreduktionsmittels Kanäle in den Treibmittelkörper bzw. Treibmittelsatz vorbilden.

Anhand der Figuren wird die Erfindung noch näher erläutert. Es zeigt:
- Fig. 1:: einen Gasgenerator, bei welchem der Treibmittelsatz von einer Hülle als Brisanzreduktionsmittel umgeben ist;
- Fig. 2:: einen Schnitt durch die in der Fig. 1 gezeigte Hülle entlang einer Schnittlinie IV-IV; und
- Fig. 3:: ein weiteres Ausführungsbeispiel für eine den Treibmittelsatz um-gebende Hülle, welche das Brisanzreduktionsmittel bildet.

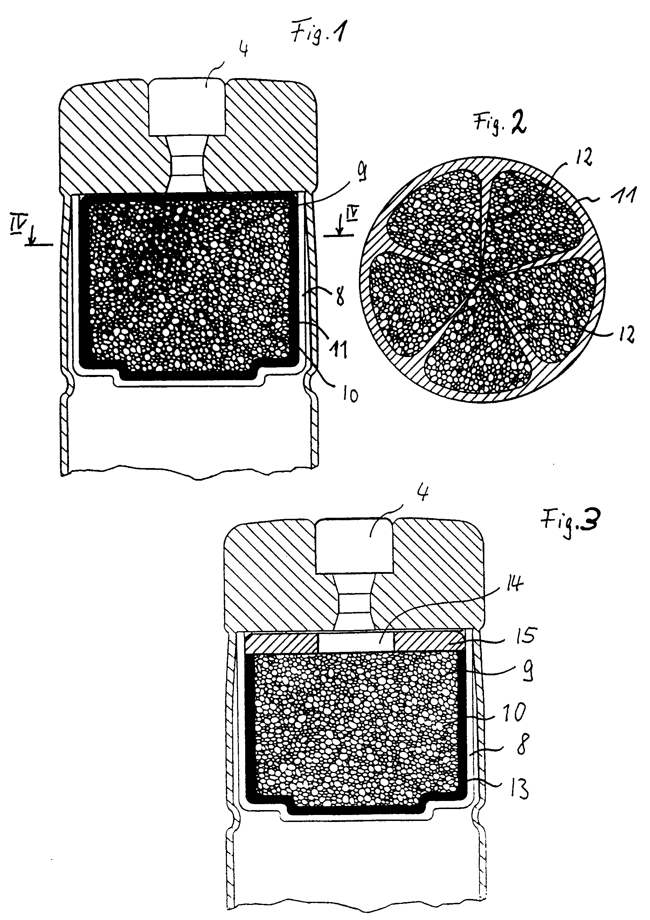

Bei dem in Fig. 1 dargestellten Ausführungsbeispiel wird ein Treibmittelsatz 10 durch eine Kunststoffhülle 11, welche als brisanzreduzierendes Mittel wirkt, in einem Gehäuse 8 umhüllt. Die Kunststoffhülle kann aus thermoplastischem Material bestehen und bei einer Temperatur oberhalb der Gebrauchstemperatur des Gasgenerators, beispielsweise oberhalb 105°C, und unterhalb der eigenen Zündungstemperatur des verwendeten Treibmittels, welche bei ca. 170°C liegt, in einen verformbaren insbesondere fließfähigen Zustand übergehen. Die Kunststoffhülle 11 kann radiale Vorsprünge 12 (Fig. 2) aufweisen, die radial nach innen ragen. Diese unterteilen den Treibmittelraum 9 in mehrere Kammern. Die Kunststoflhülle kann auch mit anderen nach innen ragenden Fortsätzen ausgestattet sein, welche bei der Selbstentzündung des Treibmittels frei werdende Energie bei ihrer Verformung und bei der Verformung des den Treibmittelsatz umhüllenden Materials, verbrauchen. Geeignete Kunststoffmaterialien sind Thermoplaste oder auch thermoplastische Elastomere.

Bei dem in der Fig. 3 dargestellten Ausführungsbeispiel ist das Brisanzreduktionsmittel in Topfform ausgebildet. In den Topf 13 ist der Treibmittelsatz 10 eingefüllt. Der Treibmittelraum 9 ist durch einen Deckel, insbesondere Kunststoffdekkel 15, in welchem eine Anzündladung 14 untergebracht sein kann, abgedeckt. Die Ausführungsbeispiele der Figuren 1 und 3 können mit einer Zündeinrichtung 4, die als Schlagzünder ausgebildet ist, ausgestattet sein. Es eignet sich jedoch auch jede andere Zündeinrichtung, beispielsweise eine elektrische Zündeinrichtung.

## Patentansprüche

1. Pyrotechnischer Gasgenerator mit einem Gehäuse (8), einer Zündeinrichtung (4) und einem im Gehäuse (8) in einem Treibmittelraum (9) angeordneten Treibmittelsatz (10), welcher bei Zündung durch die Zündeinrichtung (4) ein Antriebsgas entwickelt, das beim Austritt aus dem Gehäuse als Antriebsmittel für bewegliche Teile dient,
dadurch **gekennzeichnet,**
daß im Treibmittelraum (9), in welchem der Treibmittelsatz angeordnet ist, ferner ein Brisanzreduktionsmittel (11, 12; 13, 15) angeordnet ist, das bis zu einer Temperatur, die zwischen einer Gebrauchstemperatur des Gasgenerators und einer Selbstentflammungstemperatur des Treibmittels liegt, temperaturbeständig ist und bei einer Temperatur oberhalb seiner Temperaturbeständigkeit in einen die Brisanz des Treibmittels bei seiner Eigenentzündung reduzierenden Zustand übergeht.

2. Gasgenerator nach Anspruch 1, dadurch gekennzeichnet, daß das Brisanzreduktionsmittel (11, 12; 13, 15) bei der oberhalb seiner Temperaturbeständigkeit liegenden Temperatur in einen Zustand übergeht, durch den die Dämmung des Treibmittelraumes (9) reduziert ist.

3. Gasgenerator nach Anspruch 1 oder 2, dadurch gekennzeichnet, daß das Brisanzreduktionsmittel (11, 12; 13, 15) aus einem thermoplastischen Material besteht, das bei einer oberhalb seiner Temperaturbeständigkeit und unterhalb der Zündungstemperatur liegenden Temperatur des Treibmittels in einen verformbaren Zustand übergeht.

4. Gasgenerator nach Anspruch 3, dadurch gekennzeichnet, daß das thermoplastische Material des Brisanzreduktionsmittels (11, 12) bei einer oberhalb seiner Temperaturbeständigkeit und unterhalb der Zündungstemperatur des Treibmittels liegenden Temperatur in einen fließfähigen Zustand übergeht.

5. Gasgenerator nach einem der Ansprüche 1 bis 4, dadurch gekennzeichnet, daß im Treibmittelraum (9) in den Treibmittelsatz (10) ragende Kanäle (11) für das brisanzreduzierende Mittel vorgebildet sind.

6. Gasgenerator nach einem der Ansprüche 1 bis 5, dadurch gekennzeichnet, daß das Brisanzreduktionsmittel (11, 12) den Treibmittelsatz (10) in Form einer Hülle (11) umgibt.

7. Gasgenerator nach Anspruch 6, dadurch gekennzeichnet, daß die Hülle (11) radial nach innen ragende Vorsprünge (12) aufweist.

8. Gasgenerator nach einem der Ansprüche 1 bis 7, dadurch gekennzeichnet, daß das Brisanzreduktionsmittel in Form eines von einem Deckel (15) verschlossenen Topfes (13) ausgebildet ist.

## Claims

1. Pyrotechnic gas generator having a housing (8), an ignition device (4) and a propellant charge (10) which is arranged in a propellant chamber (9) in the housing (8) and which on ignition by the ignition device (4) generates a propulsion gas which on exit from the housing serves as a means of propulsion for movable parts,
characterised in that
in the propellant chamber (9) in which the propellant charge is arranged a means for reducing the explosive power (11, 12; 13, 15) is further arranged which up to a temperature lying between a working temperature of the gas generator and a self-igniting temperature of the propellant is thermally stable and at a temperature above its thermal stability passes over into a state reducing the explosive power of the propellant when it self-ignites.

2. Gas generator according to Claim 1, characterised in that at the temperature lying above its thermal stability the means of reducing the explosive power (11, 12; 13, 15) passes over into a state through which the insulation of the propellant chamber (9) is reduced.

3. Gas generator according to claim 1 or 2, characterised in that the means of reducing the explosive power (11, 12; 13, 15) consists of a thermoplastic material which at a temperature lying above its thermal stability and below ignition temperature of the propellant passes over into a deformable state.

4. Gas generator according to Claim 3, characterised in that at a temperature lying above its thermal stability and below the ignition temperature of the propellant the thermoplastic material of the means of reducing the explosive power (11, 12) passes over into a flowable state.

5. Gas generator according to one of Claims 1 to 4 characterised in that channels (11) projecting into the propellant charge (10) are preformed in the propellant chamber (9) for the means of reducing the explosive power.

6. Gas generator according to one of Claims 1 to 5, characterised in that the means of reducing the explosive power (11, 12) surrounds the propellant charge (10) in the form of an envelope (11).

7. Gas generator according to Claim 6, characterised in that the envelope (11) has projections (12) projecting radially inwards.

8. Gas generator according to one of Claims 1 to 7, characterised in that the means of reducing the explosive power is constructed in the form of a container (13) sealed by a lid (15).

## Revendications

1. Générateur pyrotechnique de gaz comprenant un boîtier (8), un organe d'allumage (4) et un bloc d'agent de propulsion (10) disposé dans une chambre d'agent de propulsion (9) dans le boîtier (8), et qui, après allumage par l'organe d'allumage (4), dégage un gaz moteur, qui, à la sortie hors du boîtier, est utilisé comme moyen d'entraînement pour des pièces mobiles,
caractérisé en ce que,
dans la chambre de propulsion (9), dans laquelle est disposé le bloc d'agent de propulsion, est en outre prévu un moyen (11, 12 ; 13, 15) de réduction du caractère brisant qui, jusqu'à une température comprise entre la température d'utilisation du générateur de gaz et une température d'auto-inflammation de l'agent de propulsion, est résistant à l'échauffement, et qui pour une température supérieure à sa température limite de résistance à l'échauffement, se transforme pour passer à un état réduisant le caractère brisant de l'agent de propulsion, en cas d'auto-allumage de celui-ci.

2. Générateur de gaz selon la revendication 1, caractérisé en ce que le moyen de réduction (11, 12 ; 13, 15) du caractère brisant, à une température supérieure à sa température limite de résistance à l'échauffement, se transforme pour peser à un état pour lequel la fermeture de bourrage de la chambre (9) de l'agent de propulsion, est réduite.

3. Générateur de gaz selon la revendication 1 ou 2, caractérisé en ce que le moyen de réduction (11, 12 ; 13, 15) du caractère brisant se compose d'un matériau thermoplastique qui, pour une température qui est supérieure à sa température limite de résistance à la chaleur et inférieure à la température d'allumage de l'agent de propulsion, se transforme pour passer à un état déformable.

4. Générateur de gaz selon la revendication 3, caractérisé en ce que le matériau thermoplastique du moyen de réduction (11, 12) du caractère brisant, pour une température supérieure à sa température limite de résistance à la chaleur, et inférieure à la température d'allumage de l'agent de propulsion, se transforme pour passer à un état coulant ou apte à l'écoulement.

5. Générateur de gaz selon l'une des revendications 1 à 4, caractérisé en ce que, dans la chambre (9) d'agent de propulsion, sont réalisés à l'avance des canaux (11) pour le moyen de réduction du caractère brisant, et faisant saillie dans le bloc d'agent de propulsion (10).

6. Générateur de gaz selon l'une des revendications 1 à 5, caractérise, en ce que le moyen de réduction (11, 12) du caractère brisant entoure le bloc d'agent de propulsion (10) sous la forme d'une gaine (11).

7. Générateur de gaz selon la revendication 6, caractérise en ce que la gaine (11) comporte des parties en saillie (12) faisant saillie radialement vers l'intérieur.

8. Générateur de gaz selon l'une des revendications 1 à 7, caractérisé en ce que le moyen de réduction du caractère brisant est réalisé sous la forme d'un pot (13) fermé par un couvercle (15).
